# EUROPÄISCHE PATENTANMELDUNG

(11) **EP 2 677 382 A2**
(43) Veröffentlichungstag der Anmeldung: **25.12.2013**
(21) Anmeldenummer: 13172396.7
(22) Anmeldetag: 18.06.2013
(51) Int. Cl.: G05B 19/418

(54) **Rollenbahn mit paarweiser Steuerung**

(30) Priorität: 20.06.2012 DE 102012210413
(71) Anmelder: BITO-Lagertechnik Bittmann GmbH, 55590 Meisenheim (DE)
(72) Erfinder: Gassner, Okten, 55571 Odernheim (DE); Bastian, Dr. Peter, 55546 Fürfeld (DE)
(74) Vertreter: Richardt Patentanwälte GbR

(57) **Zusammenfassung**

Die Erfindung betrifft eine Rollenbahn mit parallel nebeneinander angeordneten ersten Rollen (102; 104; 106; 108), wobei jeweils zwei einander benachbarte ersten Rollen (102; 104; 106; 108) ein Rollenpaar mit einer in Transportrichtung der Rollenbahn gesehenen vorderen Rolle und einer entgegen der Transportrichtung der Rollenbahn gesehenen hinteren Rolle bilden, wobei jedem Rollenpaar zumindest ein Steuermodul (110; 112; 114; 116) zugeordnet ist, wobei der vorderen Rolle ein Sensor zur Abgabe eines ersten Signals in Abhängigkeit vom Vorhandensein oder Nicht-Vorhandensein eines Förderguts (100; 118) in einem vordefinierten Bereich relativ zu dieser vorderen Rolle zugeordnet ist und der hinteren Rolle ein Sensor zur Abgabe eines zweiten Signals in Abhängigkeit vom Vorhandensein oder Nicht-Vorhandensein eines Förderguts in einem vordefinierten Bereich relativ zu dieser hinteren Rolle zugeordnet ist, wobei das Steuermodul (110; 112; 114; 116) dazu ausgebildet ist, eine Veränderung eines Drehverhaltens der hinteren Rolle des ihr zugeordneten Rollenpaares zu steuern, wobei das Steuermodul (110; 112; 114; 116) dazu ausgebildet ist, die Veränderung des Drehverhaltens aufgrund zumindest des ersten oder zweiten Signals und einem zeitlich während Empfang dieses ersten oder zweiten Signals erfolgenden Flankenwechsels eines Zustands des zweiten oder ersten Signals zu steuern, wobei der Abstand zwischen der vorderen Rolle und der hinteren Rolle größer als eine in der Transportrichtung gesehenen Länge des Förderguts ist, wobei die Rollenbahn in der Transportrichtung gesehen abschüssig ausgebildet ist.

## Beschreibung

Die Erfindung betrifft eine Rollenbahn mit parallel nebeneinander angeordneten Rollen, ein Verfahren zur Steuerung einer Rollenbahn und ein Computerprogrammprodukt.

Rollenbahnen sind aus dem Stand der Technik bekannt und dienen der Beförderung von Stückgut. Rollenbahnen bestehen dabei aus einer Vielzahl nebeneinander angeordneter drehbarer Rollen, wobei zum Beispiel aufgrund des Schwungs des Stückguts, eines Antriebs der Rollen und/oder einer leicht abschüssigen Erstreckung der Rollenbahnen ein "Gleiten" des Stückguts über die Rollen und damit eine Beförderung ermöglicht wird. Rollenbahnen sind auch unter den Begriff des Rollenförderers bekannt.

Stückgut, wie beispielsweise Kisten, Kartons oder Paletten, können über die Rollenbahn transportiert werden, um dadurch von einem Ort zum anderen befördert zu werden.

Um nun den Transport von Fördergut oder Stückgut auf den Rollen zu steuern, ist aus dem Stand der Technik beispielsweise die Verwendung von Sensorbrücken bekannt. Hierzu offenbart die DE 10 2005 047 977 A1 eine Rollenbahn mit parallel zueinander angeordneten und durch einen Antrieb rotierbaren Rollen zum Transport von Fördergütern entlang einer Förderrichtung quer zu den Rollenachsen, wobei zwischen zwei Rollen eine quer zur Förderrichtung verlaufende Sensorbrücke mit zumindest einem Sensorelement zur Detektierung eines Förderguts vorgesehen ist.

Der Erfindung liegt die Aufgabe zugrunde, eine verbesserte Rollenbahn, ein verbessertes Verfahren zur Steuerung einer Rollenbahn und ein entsprechendes Computerprogrammprodukt zu schafifen.

Die der Erfindung zugrunde liegenden Aufgaben werden durch die Merkmale der unabhängigen Patentansprüche gelöst. Bevorzugte Ausführungsformen der Erfindung werden in den abhängigen Patentansprüchen angegeben.

Es wird eine Rollenbahn mit parallelen nebeneinander angeordneten ersten Rollen angegeben, wobei jeweils zwei aneinander benachbarte erste Rollen ein Rollenpaar mit einer in Transportrichtung der Rollenbahn gesehenen vorderen Rolle und eine entgegen der Transportrichtung der Rollenbahn gesehenen hinteren Rolle bilden, wobei jedem Rollenpaar zumindest ein Steuermodul zugeordnet ist. Der vorderen Rolle ist ein Sensor zur Abgabe eines ersten Signals in Abhängigkeit vom Vorhandensein oder Nichtvorhandensein eines Förderguts in einem vordefinierten Bereich relativ zu dieser vorderen Rolle, z.B. auf dieser vorderen Rolle zugeordnet. Ebenso ist der hinteren Rolle ein Sensor zur Abgabe eines zweiten Signals in Abhängigkeit vom Vorhandensein oder Nichtvorhandensein eines Förderguts in einem vordefinierten Bereich relativ zu dieser hinteren Rolle, z.B. auf dieser hinteren Rolle zugeordnet. Das Steuermodul ist nun dazu ausgebildet, eine Veränderung eines Drehverhaltens zur hinteren Rolle des ihr zugeordneten Rollenpaares zu steuern, wobei das Steuermodul dazu ausgebildet ist, die Veränderung des Drehverhaltens aufgrund zumindest des ersten oder zweiten Signals und einen zeitlich während Empfang dieses ersten oder zweiten Signals erfolgenden Plattenwechsels eines Zustands des zweiten oder ersten Signals zu steuern.

Das Steuermodul kann sowohl eine prozessorgesteuerte Auswertelogik umfassen oder aber vorzugsweise durch einfache Relais realisiert sein, welche durch entsprechende Verdrahtung mit den Sensoren der Rollenpaare verschiedene Möglichkeiten der Ansteuerung der Rollen für deren Veränderung des Drehverhaltens bereitstellen.

Im Rahmen der vorliegenden Beschreibung ist die Zuordnung zumindest eines Steuermoduls einem Rollenpaar so zu verstehen, dass das zumindest eine Steuermodul sowohl das erste Signal, als auch das zweite Signal der zu diesem Rollenpaar zugehörigen vorderen und hinteren Rolle empfangen kann. Die Zuordnung kann dabei tatsächlich als ein einzelnes als solches identifizierbares Modul dem besagten Rollenpaar zugeordnet sein. Möglich ist z.B., dass eine Zuordnung nur schaltungstechnisch erfolgt. Im letzteren Fall wäre z.B. das Steuermodul durch eine spezielle Art der Verdrahtung mit den Sensoren der vorderen und hinteren Rolle inkl. zugehöriger Schaltelemente realisiert.

Die Zuordnung mindestens eines Steuermoduls zu einem Rollenpaar kann jedoch auch so realisiert sein, dass z.B. jede Rolle oder gar die Antriebseinheit jeder Rolle des Rollenpaares ein eigenes Steuermodul aufweist. In diesem Fall ist die Zuordnung dieser mehreren Steuermodule zu dem Rollenpaar dadurch gegeben, dass jedes Steuermodul die Signale des Sensors der eigenen Rolle und des Sensors der zu dieser Rolle "hinteren Rolle" empfangen und auswerten kann. In einer besonders bevorzugten Ausführungsform sind z.B. die Rollen Antriebsrollen mit einer eigenen Steuerlogik für jede Antriebsrolle, sodass durch eine entsprechende Verdrahtung der Steuerlogiken die Funktionalität als "Steuermodul" realisiert werden kann.

Die Zuordnung eines Sensors zu einer Rolle kann verschiedener Gestalt sein. Z.B. könnte die Rolle selbst den Sensor aufweisen, oder der Sensor ist in der Nähe der Rolle angeordnet. Im Falle z.B. eines optischen Sensors würde es genügen, wenn im Bereich der Rolle durch diesen Sensor optisch detektiert werden kann, ob Fördergut auf der Rolle vorhanden ist oder nicht. Dies könnte z.B. durch eine Art Lichtschranke realisiert werden. In diesem Fall wäre es nicht wesentlich, ob der zugehörige Sensor jetzt an der Rolle selbst oder irgendwo seitlich versetzt zu dieser angeordnet ist. Selbiges gilt für einen kapazitiven Sensor.

Erfindungsgemäß ist der Abstand zwischen der vorderen Rolle und der hinteren Rolle größer als eine in der Transportrichtung gesehenen Länge des Förderguts, wobei die Rollenbahn in der Transportrichtung gesehen abschüssig ausgebildet ist.

Ausführungsformen der Erfindung könnten den Vorteil haben, dass mit Bereitstellung dieser Rollenbahnen Fördergut auf der Rollenbahn befördert werden können, wobei die Art und Weise, wie das Fördergut auf den jeweiligen ersten Rollen zu liegen kommt in einfacher Weise gesteuert werden kann. Beispielsweise kann durch die Auswertung der besagten Flankenwechsel festgelegt werden, dass vorzugsweise das Fördergut in Förderrichtung regelmäßig mittig auf den ersten Rollen zu ruhen kommt, bevor eine erneute Veränderung des Drehverhaltens initiiert wird. Aufgrund der mittigen Auflage auf den ersten Rollen wird dabei die Kraftübertragung zwischen den ersten Rollen und dem Fördergut maximiert. Hierzu ist jedoch zur praktischen Realisierung keine aufwändige Lageerkennung von Fördergut auf den ersten Rollen oder im Bereich zwischen den ersten Rollen notwendig. Grundsätzlich genügt es, hierzu einfache Relais und Schalter einzusetzen. Vorzugsweise weisen die Rollen eine Einheit auf, welche in Abhängigkeit von einem Schaltsignal des Relais oder Schalters eine vordefinierte Rotation der Rolle zulässt oder durchführt. Im Falle einer Antriebsrolle könnte dies durch einen Drehgeber realisiert sein, welcher über eine Steuerelektronik und zugehörige Software in Abhängigkeit von dem Schaltsignal so gesteuert wird, dass eine Drehung um eine vordefinierten Wegstrecke stattfindet. Diese vordefinierte Wegstrecke ist programmierbar zum Transport des über dieser Rolle befindlichen Förderguts um eine vordefinierte Strecke in Abhängigkeit von Schaltsignal, z.B. über eine halbe oder volle Palettenlänge.

Unter dem Begriff des Flankenwechsels wird allgemein ein Zustandswechsel des ersten oder zweiten Signals verstanden, also der Moment der Übergangs des Zustands des Signals von einem Zustand in einen anderen Zustand. Handelt es sich bei den beiden Zuständen um diskrete Zustände, dann ist der Flankenwechsel jener zeitliche Bereich oder Moment, in dem das Signal vom einen diskreten Zustand in den anderen diskreten Zustand wechselt.

Ein weiterer Vorteil der Erfindung könnte darin bestehen, dass eine gegebenenfalls für die ersten Rollen erforderliche Antriebsenergie zur Bewegung des Förderguts in der Transportrichtung minimiert werden kann. Bei genügend starker Abschüssigkeit kann sogar auf einen Antrieb der ersten Rollen ganz verzichtet werden. Je nach Gefälle könnten die ersten Rollen auch als eine Anlaufunterstützung wirken, um das Fördergut zum selbständigen Sich-Bewegen über die Rollenbahn in die Transportrichtung in Bewegung zu setzen.

Nichtsdestotrotz ist aufgrund der beschriebenen Ausgestaltung der Rollenbahn gewährleistet, dass z.B. ohne Nachlaufsperren und Steuerfahnen ein definierter Transport des Förderguts über die Rollenbahn gewährleistet ist. Ein Risiko einer Beschädigung des Förderguts beim Transport wird minimiert, da das Fördergut ständig auf definiertem Abstand zueinander gehalten wird und sanft beschleunigt oder abgebremst werden kann.

Selbst eine Separierung von Fördergut auf der Rollenbahn ist definiert durch entsprechende Steuerung der ersten Rollen mittels des Steuermoduls möglich. Auf eine zusätzliche Separiervorrichtung, welche bei der Separierung mechanisch stark beansprucht wird, könnte also verzichtet werden.

Nach einer Ausführungsform der Erfindung sind die ersten Rollen Antriebsrollen und/oder Bremsrollen. Vorzugsweise kommen hier Rollen zum Einsatz, welche sowohl eine Antriebs- als auch eine Bremsfunktion aufweisen und damit die Geschwindigkeit, mit welcher Fördergut über sie hinweggleitet exakt regulieren können. Ferner könnten z.B. die ersten Rollen so ausgebildet sein, dass die Bremswirkung der Rollen automatisch im stromlosen Zustand des Rollenantriebs einsetzt. Dies könnte eine Sicherheit bei Stromausfall gewährleisten, da dann trotz der Abschüssigkeit der Rollenbahn gewährleistet ist, dass alles Fördergut sicher auf der Rollenbahn zum Stehen kommt und sich nicht weiter bewegen kann.

Antriebsrollen sind dann von Vorteil, wenn z.B. die beiden Rollen des Rollenpaars durch mehrere zweite Rollen beabstandet sind, wobei die zweiten Rollen frei von einer Antriebsfunktion oder Bremsfunktion sind. In diesem Fall kann insgesamt die Rollenbahn leicht abschüssig angeordnet sein, so dass durch die Antriebsrollen das Fördergut zum Gleiten über die mehreren zweiten Rollen angeschoben wird, das heißt durch die Antriebsrollen den hierfür benötigten Schwung erhält. Die Ausbildung der ersten Rollen als Bremsrollen können beispielsweise notwendig sein, wenn die Rollenbahn stark abschüssig ist und allein durch die Hangabtriebskraft der Schwung des Förderguts so hoch ist, dass ein separates Anschieben des Förderguts durch Antriebsrollen nicht notwendig ist. In diesem Fall muss lediglich dafür gesorgt werden, dass ein gewisser Mindestabstand beim Gleiten auf der Rollenbahn zwischen einander benachbarten Fördergütern eingehalten wird. Die Bremsrollen können hierbei auch eine Bewegung des Förderguts vollständig in Förderrichtung aufhalten.

Nach einer Ausführungsform der Erfindung sind die beiden Rollen des Rollenpaares durch mehrere zweite Rollen beabstandet, wobei die zweiten Rollen frei von einer eigenen Antriebsfunktion oder eigenen Bremsfunktion sind. Unter keiner "eigenen Antriebsfunktion" oder einer "eigenen Bremsfunktion" wird dabei verstanden, dass eine entsprechenden Rolle keinen eigenen Antrieb oder keine eigene Bremsvorrichtung aufweist. Ein indirekter Antrieb oder eine indirekte Bremsfunktion einer zweiten Rolle könnte jedoch durch eine mechanische Kopplung mit einer ersten Rolle realisiert sein.

Nach einer Ausführungsform der Erfindung sind unmittelbar zu einer ersten Rolle benachbarte zweite Rollen mechanisch mit der ersten Rolle gekoppelt, wobei aufgrund der mechanischen Kopplung das Rotationsverhalten der gekoppelten zweiten Rollen identisch ist mit dem Rotationsverhalten der ersten Rolle. Diese gekoppelten zweiten Rollen weisen also einen indirekten Antrieb oder eine indirekte Bremsfunktion aufgrund der mechanischen Kopplung auf.

Durch die mechanische Kopplung könnte die Wirkfläche vergrößert werden, welche auf das Fördergut die Kraft ausübt, um das Fördergut in der Förderrichtung zu bewegen. Insbesondere bei einem Querdurchlauf von Paletten könnte dies hilfreich sein, da ja in diesem Fall die Palettenkufen immer nur für eine kurze Zeitdauer mit den ersten Rollen in Kontakt kommen. Durch die Verlängerung der Wirkfläche der ersten Rollen wird diese Zeitdauer erhöht und es könnte vermieden werden, dass eine Palette mit ihren Kufen genau zwischen benachbarten ersten Rollen zum Stehen kommt.

Nach einer Ausführungsform der Erfindung kann das erste Signal zwei verschiedene Zustände in Abhängigkeit vom Vorhandensein oder Nichtvorhandensein des Förderguts in dem vordefinierten Bereich relativ zu der vorderen Rolle, z.B. auf dieser Rolle aufweisen und das zweite Signal kann zwei verschiedene Zustände in Abhängigkeit vom Vorhandensein oder Nichtvorhandensein des Förderguts in dem vordefinierten Bereich relativ zu der hinteren Rolle, z.B. auf dieser Rolle aufweisen. Vorzugsweise ist es dabei möglich, ausschließlich über den jeweiligen Zustand des Vorhandenseins oder Nichtvorhandenseins von Fördergut das vollständige Laufverhalten von Fördergut auf der Rollenbahn zu steuern. Dadurch kann das Fördergut auf der Rollenbahn so gefördert werden, dass grundsätzlich ein vordefinierter Mindestabstand zwischen zwei auf der Rollenbahn benachbart nebeneinander beförderter Fördergüter eingehalten wird. Ferner ist es dadurch möglich, durch ausschließlich diese beiden Schaltzustände die exakte Position des Förderguts auf den ersten Rollen festzulegen.

Zum Beispiel handelt es sich bei dem ersten und zweiten Signal jeweils um ein wertdiskretes Signal mit zwei möglichen Zuständen. Beispielsweise kann es sich hierbei um ein binäres Signal mit dem Zustand 0 oder 1 handeln. In einer bevorzugten Ausführungsform ist der Zustand des ersten Signals durch die Abwesenheit dieses ersten Signals gegeben, wenn das Fördergut in dem vordefinierten Bereich relativ zu der vorderen Rolle, z.B. auf dieser Rolle vorhanden ist. Ebenso ist der Zustand des zweiten Signals durch die Abwesenheit dieses zweiten Signals gegeben, im Falle des Vorhandenseins von Fördergut in dem vordefinierten Bereich relativ zu der hinteren Rolle, z.B. auf dieser Rolle. Das Signal hat also dann den jeweiligen Wert zwischen 0 und 1, bzw. im Falle von analogen Signalen beispielsweise den Wert zwischen 0 V und einem vordefinierten Spannungsschwellwert, z.B. 12V.

Die besagte Ausführungsform hat den Vorteil, dass im Falle eines Kabelbruchs, Sensorfehlers oder Stromausfalls eine bei einer der ersten Rollen den entgegen der Laufrichtung nachfolgenden Rollen das Vorhandensein von Fördergut an der Position der besagten Rolle signalisiert wird. Aufgrund dessen ist das Steuermodul dazu in der Lage, den weiteren Transportfluss nachfolgender Fördergüter zu stoppen, wobei dies eine zwangsläufige Reaktion auf das Signal des Vorhandenseins von Fördergut auf der besagten Rolle ist.

Nach einer Ausführungsform der Erfindung umfasst die Veränderung des Drehverhaltens eine Drehung der hinteren Rolle zum Transport des in dem vordefinierten Bereich relativ zu dieser hinteren Rolle, z.B. auf dieser Rolle befindlichen Förderguts um eine vordefinierte Strecke. In einer ersten Ausführungsform ist dabei die vordefinierte Strecke unabhängig von dem ersten und zweiten Signal. In einer alternativen Ausführungsform ist die vordefinierte Strecke abhängig von dem ersten und zweiten Signal, wobei jedoch hier die vordefinierte Strecke maximal zwei verschiedenen Werten größer Null entspricht. Zum Beispiel kann in dem zweiten Fall die vordefinierte Strecke der in Förderrichtung des Förderrichtung gemessenen Erstreckungslänge des Förderguts oder der Hälfte dieser Erstreckungslänge entsprechen - je nach erstem und zweitem Signal.

Durch die Wahl des Maßes "halbe oder volle Erstreckungslänge des Förderguts in Transportrichtung" ist ein einfaches Maß dafür gegeben, wie mit optimaler Befüllung der Rollenbahn eine maximale Anzahl von verschiedenen Fördergütern über die Rollenbahn gleichzeitig befördert werden kann. Die Abstände der Fördergüter werden beim Transportieren hierdurch optimiert.

Wie bereits oben erwähnt, wird beispielsweise die vordefinierte Strecke und die Veränderung des Drehverhaltens so gewählt, dass bei einem Ruhen von Fördergut auf einer ersten Rolle das Fördergut immer vorzugsweise mittig zur ersten Rolle zu ruhen kommt. Dies bedeutet jedoch nicht, dass das Fördergut grundsätzlich mittig zur ersten Rolle zu ruhen kommt, sondern lediglich dass dies einen bevorzugten Ruhepunkt darstellt, welcher jedoch lediglich in zum Beispiel mindestens 50 % aller Ruhepositionen erreicht werden kann. Vorteilhaft ist, wenn zum Beispiel die vordefinierte Strecke und die Veränderung des Drehverhaltens so gewählt sind, dass das Fördergut am Ende der Rollenbahn, d.h. am Entnahmepunkt des Förderguts immer mittig zur am Ende der Rollenbahn befindlichen ersten Rolle zu ruhen kommt. Hierdurch ist es insbesondere einfach möglich, für den Fall, dass alle Fördergüter auf der Rollenbahn hintereinander vollständig zur Ruhe gekommen sind, diese Ruhelage so zu gewährleisten, dass dann in allen Fällen alle hintereinander aufgereihten Fördergüter jeweils mittig zur darunter liegenden ersten Rolle zu ruhen kommen.

Nach einer Ausführungsform der Erfindung ist einer in Förderrichtung des Förderguts am Ende der Rollenbahn (Entnahmebereich des Förderguts) befindlichen ersten Rolle eine in Transportrichtung der Rollenbahn gesehene fiktive vordere Rolle zur Bildung des Rollenpaares zugeordnet. Z.B. stellt diese fiktive vordere Rolle immer ein erstes Signal bereit, welches dem Vorhandensein von Fördergut in einem vordefinierten Bereich relativ zu dieser fiktiven vorderen Rolle, z.B. auf dieser Rolle entspricht. Die entsprechende zugehörige hintere Rolle dieses fiktiven Rollenpaares ist dadurch in der Lage, mit demselben Sensor und Steuermodul ausgestattet zu werden wie alle übrigen ersten Rollen und Rollenpaare. Nichtsdestotrotz ist gewährleistet, dass nach Erreichen der Entnahmeposition des Förderguts auf der am Ende der Rollenbahn befindlichen ersten Rolle das Fördergut in einem vordefinierten Bereich relativ zu dieser ersten Rolle, z.B. auf dieser Rolle zum Ruhen kommt. Die erste Rolle versucht also nicht in fehlerhafter Weise, das Fördergut über das Ende der Rollenbahn hinaus zu befördern. Das Fördergut kann damit von dem Ende der Rollenbahn in einfacher Weise entnommen werden. Es nimmt am Ende der Rollenbahn immer eine vordefinierte gleiche Position ein.

Alternativ umfasst die Rollenbahn einen am Ende der Rollenbahn in Transportrichtung der Rollenbahn gesehen angeordneten Entnahmesensor, wobei der Entnahmesensor der fiktiven vorderen Rolle zugeordnet ist, wobei dieser Entnahmesensor zur Abgabe des ersten Signals in Abhängigkeit vom Vorhandensein oder Nicht-Vorhandensein des Förderguts auf diesem Entnahmesensor ausgebildet ist. Vorzugsweise befindet sich der Entnahmesensor an einer Entnahmeposition an dem Ende der Rollenbahn, so dass mittels dieses Sensors detektiert werden kann, ob augenblicklich die Entnahmeposition mit Fördergut belegt ist oder frei ist. In entsprechender Weise kann dadurch gesteuert werden, ob Fördergut durch die zugehörige hintere Rolle in diese Entnahmeposition befördert wird oder nicht.

Nach einer Ausführungsform der Erfindung ist die Lauffläche der ersten Rollen gegenüber der Lauffläche der zweiten Rollen nach oben in Richtung des zu fördernden Förderguts abgehoben. Dies unterstützt, dass die Kraft, mit welcher die Bewegung des Förderguts auf der Rollenbahn reguliert wird, maximiert wird. Denn die ersten Rollen, welche die Bewegung des Förderguts auf der Rollenbahn regulieren, haben einen optimalen Kontakt zu dem vorzugsweise hierauf mittig ruhenden Fördergut.

Nach einer Ausführungsform der Erfindung handelt es sich bei dem Sensor um einen Druckschalter. Dadurch ist es möglich, in mechanisch einfacher und damit besonders haltbarer Weise eine Steuerung der Rollenbahn zu realisieren. Jedoch ist auch die Verwendung anderer Arten von Schalter möglich, wie z.B. induktiver Näherungsschalter.

Nach einer weiteren Ausführungsform der Erfindung ist das Steuermodul dazu ausgebildet, die Veränderung des Drehverhaltens in Form eines Antriebs der hinteren Rolle zu steuern, wobei dadurch die hintere Rolle solange angetrieben wird, bis das zweite Signal das Nichtvorhandensein des Förderguts in einem vordefinierten Bereich relativ zu dieser hinteren Rolle, z.B. auf dieser Rolle angibt. Hierzu sei jedoch angemerkt, dass dies lediglich in besonderen Konstellationen einer Kombination von erstem und zweitem Signal vorzusehen ist. Durch den sogenannten Dauerlauf dieser hinteren Rolle, solange, bis das Fördergut die zweite Rolle verlassen hat, wird der Schlupf des Förderguts auf dieser zweiten Rolle minimiert. Insgesamt könnte dadurch die Beförderung des Förderguts auf der Rollenbahn wesentlich gleichmäßiger vonstatten gehen.

Nach einer Ausführungsform der Erfindung wird durch die Rollenbahn eine Lagerfläche eines Lagerregals für das Fördergut gebildet. Die Rollenbahn ist also nicht Teil einer Fördervorrichtung (keine Fördertechnik), sondern Teil eines Lagerregals mit Gefälle. Z.B. ist die Rollenbahn in ein Regal als Lagerfläche eingebaut. Ferner kann z.B. durch die Rollenbahn ein Lagerkanal eines Kanallagers gebildet werden. Dadurch könnte es möglich sein, das Lager von einer Seite durch Aufbringen von Lagergut auf die Rollenbahn zu beschicken und bei Bedarf auf der in der Transportrichtung gegenüberliegenden Seite das Lagergut nach und nach zu entnehmen. All dies kann z.B. staplerbedient von beiden Seiten der Rollenbahn erfolgen.

Nach einer Ausführungsform der Erfindung umfassen die ersten Rollen eine Antriebseinheit zur motorischen Drehung der ersten Rollen, wobei aufgrund der motorischen Drehung das Fördergut in der Transportrichtung bewegt werden kann. Z.B. ist die motorische Drehung der ersten Rollen so ausgebildet, dass das Fördergut unabhängig von seinem Gewicht mit einer vordefinierten Geschwindigkeit in der Transportrichtung bewegt werden kann.

Nach einer Ausführungsform der Erfindung ist die motorische Drehung der ersten Rollen so ausgebildet, dass die aufgrund der motorischen Drehung dem Fördergut bereitgestellte Translationsenergie des Förderguts zusammen mit der aufgrund der auf das Fördergut wirkenden Hangabtriebskraft und der daraus resultierenden kinetischen Energie gerade ausreicht, um das Fördergut in der Transportrichtung von der hinteren Rolle zu der vorderen Rolle zu bewegen. Damit könnte eine definierte Bewegung des Förderguts über die ersten Rollen gewährleistet sein, da die kinetische Energie des Förderguts in vordefinierter Weise begrenzt ist. Auch dies könnte eine hohe Sicherheit beim Transport des Förderguts gewährleisten. Außerdem werden hierdurch die auf eine der ersten Rollen wirkenden Kräfte beim Auflaufen des Förderguts auf die eine der ersten Rollen minimiert. In diesem Fall ist eine Funktion der Rollenbahn zum Transport des Förderguts nur bei vorhandenem Gefälle möglich.

In einem weiteren Aspekt betrifft die Erfindung ein Lagerregal mit einer Lagerfläche für Fördergut, wobei die Lagerfläche eine Rollenbahn wie obig beschrieben umfasst oder sogar durch eine solche Rollenbahn gebildet wird.
In einem weiteren Aspekt betrifft die Erfindung ein Verfahren zur Steuerung einer Rollenbahn mit parallel nebeneinander angeordneten ersten Rollen, wobei jeweils zwei zueinander benachbarte erste Rollen ein Rollenpaar bilden mit einer in Transportrichtung der Rollenbahn gesehenen vorderen Rolle und einer entgegen der Transportrichtung der Rollenbahn gesehenen hinteren Rolle, wobei jedem Rollenpaar zumindest ein Steuermodul zugeordnet ist. Der vorderen Rolle ist ein Sensor zur Abgabe eines ersten Signals in Abhängigkeit vom Vorhandensein oder Nichtvorhandensein eines Förderguts dieser vorderen Rolle zugeordnet und der hinteren Rolle ist ein Sensor zur Abgabe eines zweiten Signals in Abhängigkeit vom Vorhandensein oder Nichtvorhandensein eines Förderguts in einem vordefinierten Bereich relativ zu dieser hinteren Rolle, z.B. auf dieser hinteren Rolle zugeordnet. Das Verfahren wird durch das Steuermodul durchgeführt und umfasst die Schritte des Empfangens des ersten oder zweiten Signals und zeitgleich während dem Empfang dieses ersten oder zweiten Signals den Empfang eines Flankenwechsels eines Zustands des zweiten oder ersten Signals und daraufhin eine Veränderung eines Drehverhaltens der hinteren Rolle des ihr zugeordneten Rollenpaares.

Nach einer Ausführungsform der Erfindung ist der vordefinierte Bereich relativ zur hinteren und/oder vorderen Rolle ein Bereich auf dieser Rolle, d.h. ein Bereich, der durch die in Förderrichtung gesehenen Bemaßungen der Rolle begrenzt ist. Dies könnte den Vorteil haben, dass in technisch einfacher Weise eine Detektion von Fördergut realisiert werden kann, z.B. über den oben erwähnten und vorzugsweise in die Rolle integrierten Druckschalter.

Es sei jedoch angemerkt, dass durch die allgemeine Verwendung eines vordefinierten Bereichs relativ zur jeweiligen Rolle, in welchem das Fördergut detektiert wird auch Vorteile haben kann. Insbesondere, wenn sich der besagte vordefinierte Bereich vor der Rolle befindet, d.h. wenn das Vorhandensein des Förderguts detektiert wird, noch bevor dieses auf die Rolle aufläuft, ergeben sich z.B. folgende Vorteile:
Indem das Vorhandensein des Förderguts in einem vordefinierten Bereich vor der Rolle erfolgt, z.B. indem der Sensor eine gewisse Wegstrecke wie z.B. 5cm vor die Rolle gesetzt wird, fängt die Rolle rechtzeitig an zu drehen, noch bevor das Fördergut auf die Rolle aufläuft. Dadurch erhält die Rolle rechtzeitig jene Geschwindigkeit,
um das Fördergut mit seiner bisherigen oder einer vordefinierten Durchlaufgeschwindigkeit weiter zu befördern. Dadurch wird verhindert, dass die Palette über die Rolle rutscht. Dadurch werden auch entsprechende Drehmomente minimiert,
welche auf die Rolle wirken. Insgesamt wird dadurch der Durchlauf des Förderguts wesentlich sanfter und gleichmäßiger.

Wenn das Fördergut den Sensorbereich jedoch in diesem Fall verlässt, dann würde die Rolle sofort stehen bleiben (weil kein Fördergut mehr erkannt wird). Dies kann jedoch durch eine Zeitverzögerung umgangen werden. Die Zeitverzögerung müsste dann so eingestellt sein, dass wenn das Fördergut den Sensorbereich verlässt, die Rolle noch so lange weiter dreht, bis das Fördergut auch die Rolle verlassen hat. Die Zeitverzögerung kann in Abhängigkeit von der Durchlaufgeschwindigkeit geregelt werden.

Durch das setzen des Sensorbereichs vor die Rolle wird verhindert, dass ein Fördergut mit einer Geschwindigkeit (Durchlaufgeschwindigkeit) auf eine (noch stehende) Rolle auftrifft und der Sensor erst dann das Fördergut erkennt und die Drehbewegung veranlasst. Die Elektronik von Antrieben hat nämlich typischerweise eine gewisse Reaktionszeit und die Rolle kann nicht sofort auf die Geschwindigkeit des durchlaufenden Förderguts beschleunigen. Hier ist unter Umständen eine Anlaufzeit selbst unter einer Sekunde zu lange. Wenn die Rolle noch steht oder noch nicht die Volle Geschwindigkeit hat und das Fördergut mit seiner Durchlaufgeschwindigkeit auftritt, wird durch die resultierende Reibung aufgrund der zu geringen Rotationsgeschwindigkeit der Rolle zwischen Fördergut und Rolle ein hohes Drehmoment in der Rolle erzeugt. Dieses Drehmoment kann die Bauteile (wie z.B. das Getriebe) sehr stark belasten und der Durchlauf erfolgt nicht gleichmäßig, da die Palette durch das "über die Rolle rutschen" verzögert und anschließend gleich wieder vom Motor beschleunigt wird.

In einem weiteren Aspekt betrifft die Erfindung ein Computerprogrammprodukt mit für einen Prozessor ausführbaren Instruktionen zur Durchführung der Schritte des beschriebenen Verfahrens.

Im Folgenden werden bevorzugte Ausführungsformen der Erfindung anhand der Zeichnungen näher erläutert. Es zeigen:
- Fig. 1: eine schematische Übersicht eines Verfahrens zur Steuerung einer Rollenbahn,
- Fig. 2: eine schematische Übersicht eines alternativen Verfahrens zur Steuerung einer Rollenbahn,
- Fig. 3: eine tabellarische Übersicht verschiedener Sensorzustände,
- Fig. 4: ein Blockschaltbild einer Rollenbahn mit verschiedenen Rollen.

Im Folgenden werden einander ähnliche Elemente mit den gleichen Bezugszeichen gekennzeichnet.

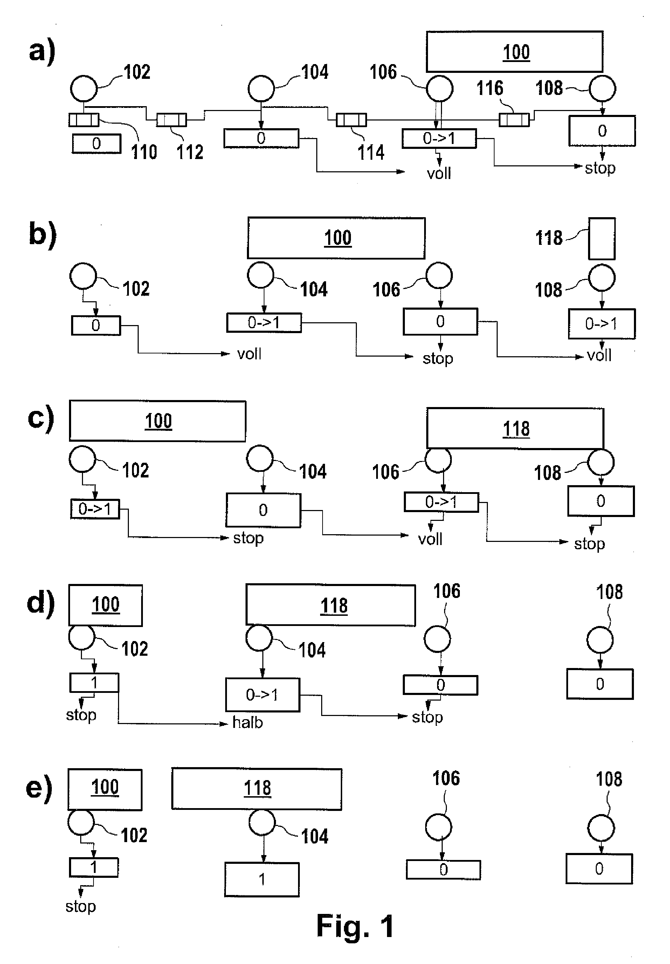

Die Figur 1 zeigt eine schematische Übersicht verschiedener Schritte, mittels welcher ein Fördergut über verschiedene Rollen einer Rollenbahn befördert wird. Die Rollenbahn weist dabei Förderrollen 102, 104, 106 und 108 auf. Die Förderrichtung ist von rechts nach links, das heißt ausgehend von der Förderrolle 108 in Richtung zur Förderrolle 102. Bei den Förderrollen 102 bis 108 handelt es sich um Antriebesrollen, welche durch Steuermodule 110, 112, 114 und 116 angesteuert werden. Zu diesem Zweck weisen die Förderrollen 102 bis 108 beispielsweise einen elektromotorischen Antrieb auf.

Zwischen den Förderrollen 102 bis 108 (erste Förderrollen) befinden sich in Figur 1 nicht näher gezeigte zweite Rollen, welche jedoch antriebslos sind. Ferner sei im Folgenden ohne Beschränkung der Allgemeinheit davon ausgegangen, dass die Förderrollen 102 bis 108 in Richtung von rechts nach links leicht abschüssig angeordnet sind. Dadurch ergibt sich insgesamt eine leicht schräg nach links unten weisende Rollenbahn und damit über die nicht gezeigten Förderrollen insgesamt eine Lauffläche, über welche entsprechendes Fördergut von rechts nach links befördert werden kann. Hierbei ist es jedoch möglich, die Neigung dieser Rollenbahn so vorzusehen, dass Fördergut nach Anstoßen durch eine der Rollen 102 bis 108 jeweils nur bis zur nächsten Rolle gleitet, um dann von dieser nächsten Rolle 102 bis 108 weiter befördert zu werden. Ein bevorzugter Neigungswinkel liegt dabei im Bereich von 2-3 Grad.

Jeder der Rollen 102 bis 108 ist ein Sensor zugeordnet, welcher das Vorhandensein oder Nichtvorhandensein von Fördergut auf der jeweiligen Förderrolle 102 bis 108 detektiert. Die Förderrollen 102 bis 108 sind zu sogenannten Rollenpaaren zusammengefasst. Jeweils zwei aneinander benachbarte Rollen 102 bis 108 bilden dabei ein Rollenpaar mit einer in Transportrichtung der Rollenbahn gesehenen vorderen Rolle und einer entgegen der Transportrichtung der Rollenbahn gesehenen hinteren Rolle. Jedem dieser Rollenpaare ist dabei eines der Steuermodule 110 bis 116 zugeordnet. So bilden beispielsweise die Rollen 106 und 108 ein Rollenpaar mit zugeordnetem Steuermodul 116. Dieses Steuermodul 116 erhält Signale von den Sensoren der Rollen 106 und 108 bezüglich des am Ort der Rollen 106 und 108 jeweils befindlichen oder nicht befindlichen Förderguts.

Lediglich bezüglich der Rolle 102 ist nach links gesehen keine weitere vordere Rolle zugeordnet. Beispielsweise wird von der Rolle 102 darüber befindliches Fördergut direkt entnommen. Um in diesem Fall das Vorhandensein einer fiktiven vorderen Rolle zu simulieren, ist intern das Steuermodul so verschaltet, als ob tatsächlich eine vordere Rolle, das heißt eine Rolle in Richtung der Förderrichtung nach links vor der Rolle 102 vorhanden ist, wobei diese fiktive Rolle dauerhaft mit Fördergut belastet ist. Hierauf sei jedoch später im Detail noch eingegangen.

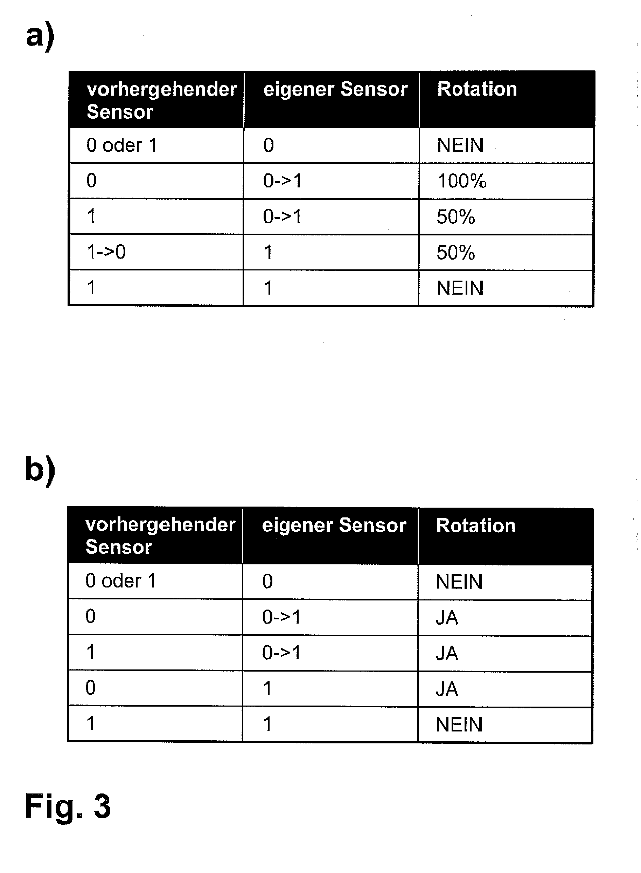

In dem in Figur 1A gezeigten Zustand ist ein Fördergut 100, beispielsweise eine Palette 100 mit ihrer linken Kante gerade auf die Rolle 106 aufgerollt. Hierzu hatte die Rolle 108 eine entsprechende nach links antreibende Förderbewegung durchgeführt. Die Palette 100 hatte die Rolle 108 verlassen und ist über die nicht ersichtlichen Rollen zwischen den Rollen 106 und 108 auf die Rolle 106 aufgerollt. Das Steuermodul 116 sorgt nun für ein bestimmtes Antriebsverhalten der Rolle 108 und das Steuermodul 114 sorgt für ein bestimmtes Antriebsverhalten der Rolle 100. Das Antriebsverhalten richtet sich dabei entsprechend der Fallunterscheidungstabelle, wie sie beispielsweise in Tabelle Figur 3a gezeigt ist.

Bezüglich des Steuermoduls 116 ist die Rolle 108 die Rolle mit dem "hinteren Sensor" und die Rolle 106 die vordere Rolle mit dem "vorderen Sensor". Da sich die Fallunterscheidungstabelle der Figur 3 immer auf die Lage des Sensors der antreibenden Einheit richtet, ist in der Situation der Figur 1 a das Signal, welches der eigene Sensor der Rolle 108 liefert, das Signal eines unbelasteten Zustands, im vorliegenden Fall zum Beispiel der Wert Null. In dem Augenblick, als die Palette 100 die Rolle 108 verlassen hat, hat also an der Rolle 108 ein Signalübergang von 1 (Rolle belegt) nach 0 (Rolle unbelegt) stattgefunden. Dies bedeutet jedoch entsprechend Tabelle in Tabelle Figur 3a, dass der Antrieb der Rolle 108 keine weitere Drehung der Rolle 108 mehr durchzuführen hat. Das Steuermodul 116, welches die entsprechenden Signale der Rolle 106 und 108 auswertet, steuert also den Antrieb der Rolle 108 so, dass diese keine weitere Drehung durchführt. Eine weitere Drehung würde im vorliegenden Fall auch keinen Sinn machen, da kein über der Rolle befindliches Transportgut vorhanden ist.

Bezüglich der Rolle 108 ist es dabei unerheblich, welchen Zustand der Sensor der Rolle 106 augenblicklich detektiert, da unabhängig von jeglicher Detektion bei Nichtvorhandensein einer Palette über der Rolle 108 keine Rotation der Rolle mehr stattzufinden hat (vgl. erste Zeile der Tabelle der Tabelle Figur 3a).

Ebenfalls in Tabelle Figur 3a ist ersichtlich, dass in dem Augenblick des Auflaufens der Palette 100 auf die Rolle 106 der Sensor einen Flankenwechsel, das heißt einen Übergang des Signals von Unbelegt (0) auf Belegt (1) detektiert. Zu diesem Zeitpunkt des Flankenwechsels empfängt das Steuermodul 114 vom Sensor der Rolle 104 die Information, dass die Rolle 104 belegt ist (Signal 0). Entsprechend der Tabelle der Tabelle Figur 3a bedeutet dies, dass nun die Rolle 106 so angesteuert werden kann, dass die Palette in Förderrichtung entlang einer vollen Palettenlänge (100 % der Palettenlänge) transportiert wird. Das Ergebnis ist in der Figur 1b gezeigt.

Das Steuermodul 112 empfängt sowohl vom Sensor der Rolle 102 als auch vom Sensor der Rolle 104 das dauerhafte Signal 0 des Unbelegtseins der Rollen 102 und 104, so dass die jeweiligen Antriebe der Rollen 102 und 104 nicht betätigt werden.

In der Figur 1b hat sich die Palette 100 aufgrund des Antriebs durch die Rolle 106 nach links belegt und liegt nun mit der Vorderkante auf der Rolle 104 auf. Die Rolle 102 ist nach wie vor frei von einer Palette. Die Rolle 106 ist zum in der Figur 1b gezeigten Zeitpunkt ebenfalls frei von einer Palette und auf die Rolle 108 ist von rechts kommend eine weitere Palette 118 aufgerollt. Nicht gezeigt in den weiteren Figuren 1b-e sind die Steuermodule 110, 112, 114, 116.

Zum Zeitpunkt des Aufrollens der Palette 100 auf die Rolle 104 detektiert der Sensor der Rolle 104 dieses Aufrollen und es findet damit ein Flankenwechsel von Zustand 0 (unbelegte Rolle) auf Zustand 1 (belegte Rolle) statt. Exakt zu dem Zeitpunkt dieses Flankenwechsels wird von dem Sensor der Rolle 102 der Zustand 0 (unbelegt) signalisiert, woraus sich wiederum gemäß Tabelle Tabelle Figur 3a ein Antrieb der Rolle 104 dergestalt ergibt, dass sich die Palette 100 und ihre gesamte Palettenlänge nach links bewegt. Das Resultat diesbezüglich ist in Figur 1C ersichtlich.

Da die Rolle 106 in Figur 1b unbelegt ist, ist diesbezüglich der Zustand der Rolle 104 unerheblich - der Antrieb der Rolle 106 befindet sich im gestoppten Zustand.

Bezüglich der Rolle 108 findet zu dem Zeitpunkt des Aufrollens der Palette 118 auf diese Rolle 108 ein Flankenwechsel von 0 zu 1 statt. Gleichzeitig ist die davor liegende Rolle 106 unbelegt, womit sich wiederum entsprechend Tabelle 3a eine Rotation der Rolle 108 über deren Antrieb dergestalt ergibt, dass die Palette 118 um eine vollständige Palettenlänge nach links bewegt wird. Das Resultat ist in Figur 1c ersichtlich.

In der Figur 1d sind die Palette 100 mit ihrer Vorderkante auf der Rolle 102 aufgerollt, so dass zum Zeitpunkt des Aufrollens der Sensor der Palette 110 das Vorhandensein der Palette 100 detektiert. Es findet also zu diesem Zeitpunkt ein Flankenwechsel von 0 auf 1 statt. Bezüglich des Verhaltens des Antriebs der Rolle 102 ist nun das zugehörige Steuermodul 110 so verschaltet, dass eine fiktive Rolle links von der Rolle 102 simuliert wird, wobei die Simulation dergestalt ist, als wäre diese fiktive Rolle dauerhaft belegt. Somit empfängt das Steuermodul 110 von dieser fiktiven Rolle links von der Rolle 102 ein Signal belegt (1), wobei gleichzeitig ja der Übergang von 0 auf 1 an der Rolle 102 detektiert wird. Entsprechend der Tabelle der Tabelle Figur 3a bedeutet dies eine Rotation der Rolle 102 soweit, dass die Palette 100 50 % ihrer Palettenlänge weiter nach links bewegt wird. Dadurch kommt, wie in der Figur 1e ersichtlich, die Palette 100 mittig auf der Rolle 102 zum Liegen. Dadurch lastet auf der Rolle 102 ein erheblicher Teil des Gewichts der Palette 100. Nur links und rechts von der Rolle 102 sind lediglich die weiteren antriebslosen Rollen angeordnet, wobei jedoch die Hauptstützfunktion durch die Rolle 102 ausgeübt wird. Dadurch ist eine besonders effektive Kraftübertragung zwischen der Rolle 102 und dem Boden der Palette 100 möglich.

Bezüglich der Palette 118 in der Figur 1c gelten die weiteren Schritte, wie sie bereits obig bezüglich der Figuren 1A und b diskutiert wurden. Deshalb sei im Folgenden direkt zur Figur 1d übergegangen, welche den Zustand zeigt, nach dem sowohl die Palette 100 als auch die Palette 118 nach links bewegt wurden.

In der Figur 1d ist soeben die Palette 118 auf die Rolle 104 aufgerollt, so dass hier ein Übergang von 0 auf 1 detektiert wird. Gleichzeitig signalisiert der Sensor der Rolle 102 das Vorhandensein einer Palette auf der Rolle 102. Entsprechend der Tabelle der Tabelle Figur 3a ergibt sich damit ein Steuerbefehl an den Antrieb der Rolle 104, welche die Bewegung der Palette 118 nach links um eine halbe Palettenlänge bewirkt. Daraus ergibt sich als Schlussposition die in Figur 1e gezeigte Anordnung von Palette 100 und Palette 118. Beide Paletten sind jeweils mittig zu ihren darunter liegenden Rollen 102 und 104.

Die in Figur 1e ersichtliche Endposition der Paletten 100 und 118 kann analog für weitere Paletten fortgesetzt werden, welche dann jeweils mittig auf den Rollen 106 und 108 zu liegen kommen. Wird nun die Palette 100 durch beispielsweise einen Gabelstapler von der Rolle 102 entnommen, kann durch den mittig zur Palette 118 befindlichen Antrieb der Rolle 104 die Palette 118 sehr effektiv in eine Bewegung nach links ersetzt werden.

Es sei an dieser Stelle angemerkt, dass es auch möglich sein könnte, dass beispielsweise in der Figur 1 a der Antrieb der Rolle 106 so gesteuert wird, dass der Antrieb eine vordefinierte Anzahl von Rotationen der Rolle 106 bewirkt. Dies führt dazu, dass die darüber befindliche Palette 100 um eine exakt vordefinierte Wegstrecke nach links bewegt wird. Alternativ ist jedoch auch möglich, dass an die Rolle 106 bzw. deren Antrieb der Befehl gegeben wird, dass eine Rotation solange stattgefunden hat, bis die Palette 100 die Rolle 106 nicht mehr belastet. Dies ermöglicht es, den Schlupf bezüglich der Palette 100 zu minimieren. Die Rolle 106 hört automatisch auf zu drehen, sobald die Palette 100 die Rolle 106 verlassen hat. Diese dauerhafte Rotation sollte jedoch nur für die Fälle stattfinden, bei denen die jeweilige Palette auch die Rolle verlassen soll. Dies gilt somit nicht für den Fall, dass die Palette mittig auf der Rolle zu Ruhen kommen soll.

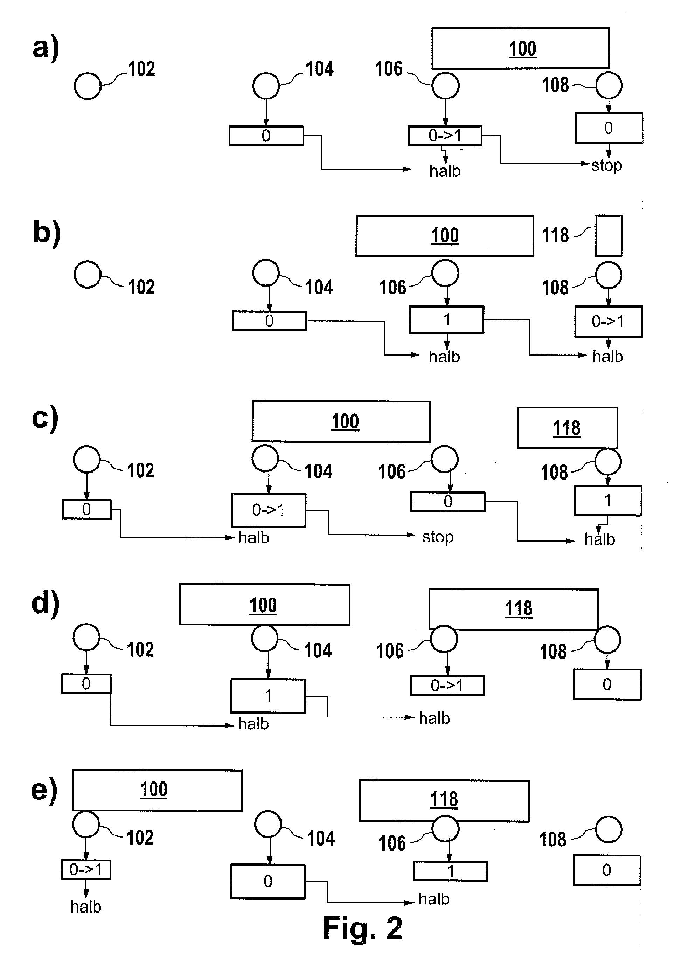

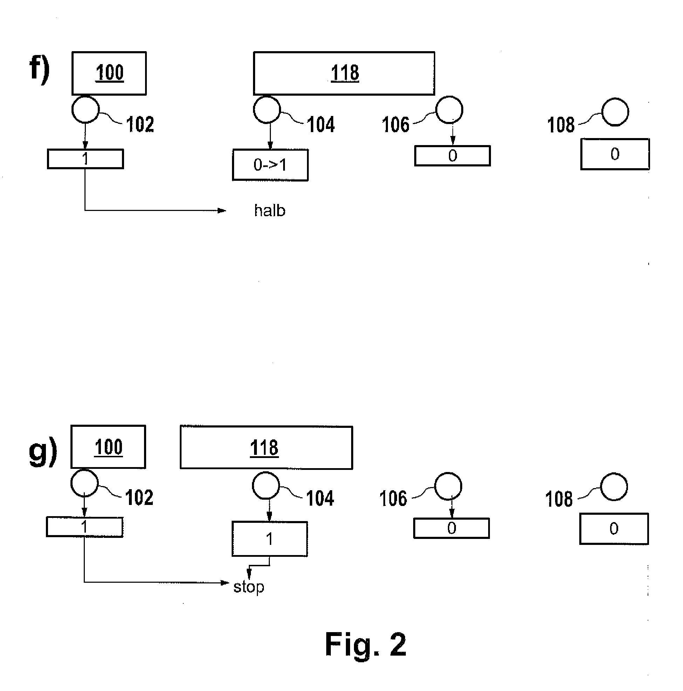

Während in der Figur 1 die Fördervariante mit den Schritten entsprechend Tabelle Figur 3a gezeigt wurde, ist in Figur 2 der Transport von Paletten über entsprechende Rollen gemäß den Entscheidungskriterien der Tabelle in Figur 3b gezeigt. Figur 1 zeigt dabei eine Variante, welche aufgrund der teilweisen Beförderung um ganze Palettenlängen einen relativ gleichmäßigen Transport von Paletten ermöglicht. Bei der Variante der Figur 2 werden hingegen grundsätzlich Beförderungen um höchstens halbe Palettenlängen vorgenommen, so dass insgesamt jedoch die beim Förderprozess maximalen Abstände zwischen einander benachbarten Paletten geringer sind.

Die Anordnung der Rollen 102 bis 108, der zugehörigen Sensoren und Steuermodule sind in den Figuren 1 und 2 identisch, wobei in Figur 2 auf die zusätzliche Illustration der Steuermodule 110-116 der Übersichtlichkeit halber verzichtet wurde.

Auch die Figur 2 geht in Figur 2a davon aus, dass zunächst eine Palette 100 aufgrund einer Rotation der Rolle 108 auf die Rolle 106 aufgerollt wird. Aus diesem Grund detektiert der Sensor der Rolle 106 einen Flankenwechsel von unbelegt zu belegt, das heißt von 0 auf 1. Gleichzeitig signalisiert die vorhergehende Rolle 104, dass diese unbelegt von einer Palette ist, so dass sich entsprechend der Tabelle der Figur 3b eine Rotation der Rolle 106 ergibt. Im vorliegenden Falle sind sämtliche Rotationsvorgänge, die durchgeführt werden, identisch und entsprechen dabei einer halben Länge der Palette 100, in Förderrichtung gesehen. Da außerdem der Sensor der Rolle 108 die Abwesenheit einer Palette detektiert, wird eine entsprechende Rotation der Rolle 108 über deren Antrieb nicht vorgenommen (vgl. erste Zeile der Tabelle der Figur 3b).

Das Resultat der Rotation der Rolle 106 ist in der Figur 2b ersichtlich, wobei nun die Palette 100 mittig zur Rolle 106 zum Liegen kommt. Die Palette 100 befindet sich dabei dauerhaft auf der Rolle 106, so dass deren Sensor dauerhaft das Signal "Belegt", das heißt 1 abgibt. Da die vorhergehende Rolle 104 nach wie vor unbelegt ist, führt dies wiederum zu einer Rotation der Rolle 106 und eine Weiterbewegung der Palette 100 in Förderrichtung, das heißt in Richtung der Rollen 102 und 104. In der Zwischenzeit ist durch eine der Rolle 108 rechts nachfolgende Rolle die Palette 118 aufgerollt worden. Die Rolle 108 erfährt dabei eine Veränderung von unbelegt zu belegt, das heißt ein Flankenwechsel von 0 auf 1. Da jedoch außerdem die vorhergehende Rolle 106 ein dauerhaftes Belegt (1) signalisiert, bedeutet dies entsprechend der Tabelle der Figur 3b, dass nun die Rolle 108 eine Rotation vornehmen kann, welche maximal einer halben Palettenlänge entspricht. Würde in diesem Fall die Palette 100 nicht bewegt werden, würde nach Abschluss der Rotation der Rolle 108 die Palette 118 mit einem geringen Abstand unmittelbar benachbart zur Palette 100 zu liegen kommen.

Allerdings wird in der Zwischenzeit aufgrund der Rotation der Rolle 106 die Palette 100 wieder nach links auf die Rolle 104 befördert worden sein (vgl. Figur 2c).

Die besagten Verfahrensschritte wiederholen sich nun bezüglich Figur 2c, 2d und 2e. Die Rolle 102 ist grundsätzlich so verschaltet, dass die ihr vorausgehende fiktive Rolle das Signal "Belegt" (1) dauerhaft abgibt. Das Simulieren der fiktiven Rolle ist also lediglich eine schaltungstechnische Maßnahme, realisiert beispielsweise durch entsprechende Verdrahtung des zugehörigen Steuermoduls 110. Dadurch wird dauerhaft im Steuermodul simuliert, dass eine vorhergehende Rolle vorhanden ist und dass diese fiktive Rolle dauerhaft belegt ist. Als Resultat erfährt das zugehörige Steuermodul 110 in Figur 2e die Informationen, dass zum einen eine vorhergehende Rolle belegt ist und zum anderen die Rolle 110 das Aufrollen der Palette 100 erfahren hat, das heißt, dass hier zu diesem Zeitpunkt ein Flankenwechsel von 0 auf 1 stattgefunden hat. Aus diesem Grund wird die Rolle 102 nochmals eine Rotation der Gestalt durchführen, dass die Palette 100 um eine halbe Palettenlänge nach links bewegt wird. Das Resultat ist diesbezüglich in Figur 2f ersichtlich. Gleichzeitig wird analog der obigen Erläuterung die Palette 118 auf die Rolle 104 mit ihrer Vorderkante aufbewegt werden.

Durch dieses Aufbewegen erfährt die Rolle 104 eine Belastung. Dies entspricht einem Flankenwechsel von 0 auf 1, so dass in der Figur 2f die Palette 118 nochmals um eine halbe Palettenlänge nach links bewegt werden kann - der Sensor der Rolle 102 liefert lediglich das Signal "Belegt" (1). Da das Steuermodul der Rolle 102 in der Figur 2f dauerhaft das Belegtsignal der fiktiven vorhergehenden Rolle erhält und außerdem die eigene Rolle 102 ebenfalls belegt, entspricht dies entsprechend der Tabelle der Figur 3b dem Zustand, in welchem die Rolle 102 keine Rotation mehr durchführen soll. Die Palette 100 liegt also mittig auf der Rolle 102 und kann von einem entsprechenden Entnahmegerät entnommen werden, beispielsweise einem Gabelstapler.

In der Figur 2g hat die Rolle 104 nochmals eine Rotation durchgeführt, so dass daraufhin die Palette 118 auch mittig auf der Rolle 104 zu liegen kommt. In diesem Zustand detektieren beide Sensoren der Rollen 102 und 104 das dauerhafte Belegtsein durch jeweilige Paletten, so dass die Rolle 104 nun auch keine weitere Rotation mehr durchführt. Erst wenn die Palette 100 beispielsweise durch den Gabelstaplerfahrer entnommen wurde, wird die Rolle 102 frei und die Rolle 118 kann nach links durch die Rolle 104 weiter geschoben werden. Dies entspricht dann dem Zustand, in welchem der Sensor der Rolle 102 ein Unbelegt (0) signalisiert und der Sensor der Rolle 104 ein Belegt (1) signalisiert. Dies führt entsprechend der Tabelle der Figur 3b zu einer Rotation.

Allgemein gilt im Rahmen der vorliegenden Offenbarung, dass vorzugsweise die Verschaltung der jeweiligen Sensoren und Steuermodule der Gestalt ist, dass gerade dann kein Signal abgegeben wird, wenn eine jeweilige Rolle unbelegt ist. Dies entspricht also der Logik genau umgekehrt der Beschreibung der Figuren 1 und 2 mit "0" und "1", wobei jedoch der Einfachheit halber im vorliegenden Fall Belegt mit "1" und Unbelegt mit "0" gekennzeichnet wurde. Dadurch, dass im belegten Zustand grundsätzlich kein Signal erforderlich ist, hingegen im unbelegten Zustand der Sensor der Rolle aktiv das Nichtvorhandensein einer Palette signalisieren muss, ist sichergestellt, dass auch bei defektem Sensor, Stromausfall oder Kabelbruch dem zugehörigen Steuermodul zwangsweise das Vorhandensein einer Palette simuliert wird. Es wird also nicht zu dem Problem kommen, dass beispielsweise aufgrund eines Kabelbruchs bei der Rolle 104 das Steuermodul 114 der Meinung ist, Rolle 104 sei unbelegt. Gegenteilig geht in diesem Fall das Steuermodul 114 davon aus, dass Palette 104 belegt ist, so dass die Rolle 106 nie so angesteuert wird, dass eine darüber befindliche Palette auf die Rolle 104 aufgeschoben wird. Eine gegebenenfalls auf der Rolle 104 befindliche Palette wird damit nie durch eine nachfolgende Palette im Falle einer Fehlfunktion berührt und dadurch gegebenenfalls beschädigt.

Ferner sei angemerkt, dass im Rahmen der vorliegenden Offenbarung lediglich der Einfachheit halber von halben und ganzen Palettenlängen und entsprechender Rotationen der Rollen 102 bis 108 ausgegangen wurde. In der Praxis ist es jedoch so, dass die Strecke, über welche Paletten durch Rotation der Rollen 102 bis 108 gefördert werden können, frei wählbar sind. So ist es beispielsweise möglich, lediglich Beförderungsstrecken mit 40 % einer Palettenlänge anzugeben. Dies kann beispielsweise kombiniert werden mit der Möglichkeit der Dauerlauffunktion der Rollen, wodurch diese solange rotieren, bis die darüber befindliche Palette die jeweilige Rolle verlassen hat.

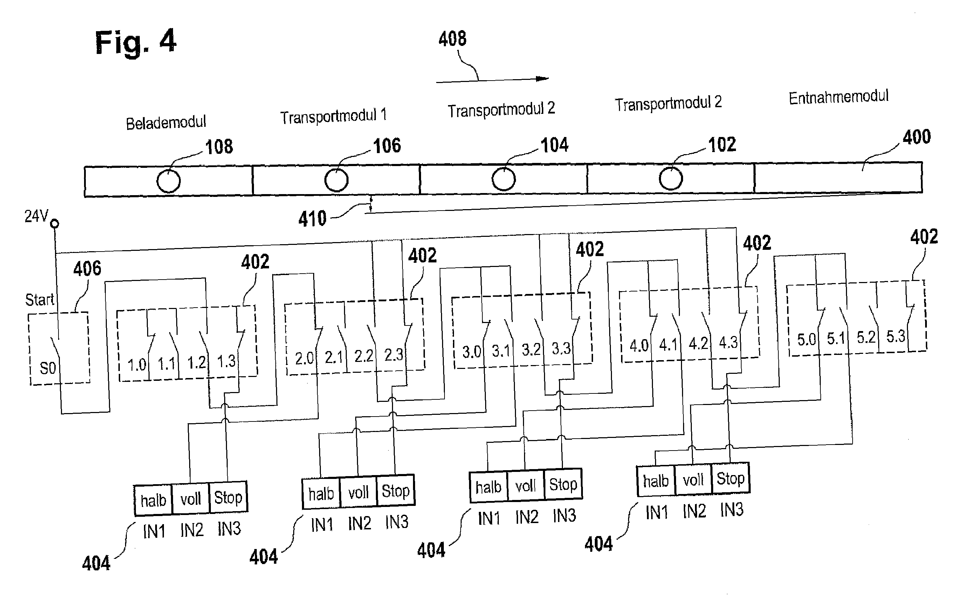

Die Figur 4 zeigt eine schematische Übersicht über die Verschaltung von Sensoren und Steuermodulen von entsprechenden Rollen 102 bis 108. Zu beachten ist dabei, dass nun die Förderrichtung 408 von links nach rechts gesehen ist, wobei die Rollen 102 bis 108 so angeordnet sind, dass die resultierende abschüssige Förderstrecke um einen Winkel 410 nach unten geneigt ist, so dass ein Gefälle entsteht. Die Rollen 102 bis 108, welche wiederum Antriebsrollen sind, unterstützen durch Anschieben von darüber befindlichen Fördergütern deren schwerkraftbedingten Lauf in Förderrichtung 408.

In der Ausführungsform der Figur 4 sind die Steuermodule der Rollenpaare durch Relais 402 realisiert. Jedes Relais hat dabei vier Schaltkontakte. Die Relais können dabei durch mechanische Belastungen aufgrund des Vorhandenseins eines Gewichts auf den Rollen 102 bis 108 geschaltet werden. Ferner ist in der Figur 4 wiederum die Variante gezeigt, in welcher im belasteten Zustand ein Signal abgegeben wird, um einen der jeweiligen Rolle zugeordneten Antriebsmotor 404 zu betreiben. Dies ist jedoch lediglich dem einfachen Verständnis halber so dargestellt.

Die Figur 4 geht außerdem davon aus, dass in dem in Figur 4 gezeigten Zustand sämtliche Rollen 102 bis 108 unbelegt, das heißt frei von entsprechenden Paletten sind. Aus diesem Grund befinden sich sämtliche Antriebe 404 im gestoppten Zustand.

Grundsätzlich sind die Antriebe 404 in der Figur 4 zur Realisierung des Transportschemas entsprechend der Figur 1 ausgebildet. Das heißt, die Motoren beherrschen sowohl Umdrehungen bezüglich voller also halber Palettenlängen.

Die Rolle 108 kann beispielsweise die Rolle eines Belademoduls sein, wohingegen es sich bei den Rollen 102 bis 106 um Rollen von Transportmodulen handelt. Das rechte Modul 400 kann ein Entnahmemodul sein, welches ebenfalls eine nicht weiter ersichtliche Rolle (analog einer der Rollen 102 bis 106) aufweist. Wie bereits oben erwähnt, ist dabei das entsprechende Relais (Steuermodul) so verschaltet, dass es der Meinung ist, es läge auf der rechten Seite in Förderrichtung 408 gesehen noch eine weitere belegte fiktive Rolle vor.

Im Folgenden sei exemplarisch auf die Verschaltung des Steuermoduls mit Relais 402 eingegangen, welches den Rollen 106 und 104 zugeordnet ist. Die Schaltkontakte sind dabei mit den Ziffern 2.0, 2.1, 2.2 und 2.3 gekennzeichnet. Die Kontakte 2.0, 2.1, 2.2 und 2.3 werden dabei alle gleichzeitig geschaltet, um einen gleichzeitigen Flankenwechsel bezüglich des Sensorsignals der Rolle 106 bzw. 104 und damit einen Belegt- oder Unbelegt-Zustand der Rolle 106 bzw. 104 zu detektieren und in praktischer Weise zu nutzen. Im unbelegten Zustand der Rolle 106 darf entsprechend der ersten Zeile der Tabelle der Figur 3a keine Rotation der Rolle 106 stattfinden. Kontakt 2.3 ist geschlossen und über die Spannungsversorgung 406 liegt damit lediglich eine Spannung am Motoreingang IN 3 vor. Diese Spannung kann beispielsweise einem aktiven Bestromen des Motors zum Halten des Motors und damit zum aktiven Aufbringen einer Haltekraft genutzt werden.

Der Schaltzustand der Kontakte 3.0 und 3.1 des Relais 402 ist dabei vollkommen unerheblich, da über diese Kontakte erst dann ein Strom zu den Eingängen IN 1 und IN 2 des Motors der Rolle 106 geliefert werden kann, wenn Kontakt 2.2 geschlossen ist. Ist dies der Fall, so entspricht dieses Schließen des Kontaktes 2.2 einem Flankenwechsel von 0 auf 1. Die Bestromung des Motoreingangs IN 3 wird aufgehoben und in Abhängigkeit vom Vorhandensein oder Nichtvorhandensein einer Palette auf der Rolle 104 führt daraufhin der Motor der Rolle 106 eine Förderbewegung über eine halbe oder eine volle Palettenlänge durch. Ist die Rolle unbelegt, so kann eine volle Palettenlänge befördert werden (geschlossener Kontakt 3.0). Ist die Rolle 104 hingegen belegt, kann lediglich eine halbe Palettenlängenbeförderung vorgenommen werden (in diesem Fall wäre Kontakt 3.1 geschlossen).

Wie aus der Figur 4 ersichtlich ist, gibt es damit für ein Rollenpaar (beispielsweise Rollen 104 und 106) kein "separates" Steuermodul. Das Steuermodul ist vielmehr bereits durch die Ausgestaltung in Form eines Relaisschalters mit vier Kontakten und einer entsprechenden Verschaltung mit Schaltern eines nachgeordneten gleichartigen Relais realisiert. Zur Realisierung dieser Variante ist also insbesondere eine mikroprozessorgestützte Steuerung oder ähnliches nicht notwendig - es reichen hierfür einfache mechanische Komponenten wie mechanische Sensoren und mechanische Relais.

Nichtsdestotrotz ist es auch möglich, im vorliegenden Fall entsprechende Sensoren durch beispielsweise Lichtschranken und entsprechende Steuermodule in Form von Mikroprozessorsteuerungen zu realisieren. Dies ermöglicht insbesondere eine vereinfachte Ausgestaltung eines entsprechenden Antriebs 404, da dann entsprechende Steuermodule selbstständig die Dauer der Bestromung und damit die Förderung um entsprechende beliebige Palettenlängen regeln können.

Es sei angemerkt, dass allgemein die Relais auch Teil der jeweiligen Motoren sein können. Dadurch vereinfacht sich insgesamt der Aufbau einer Rollenbahn in der Praxis, da lediglich Antriebs- und/oder Bremsrollen mit integriertem Motor inkl. zugehöriger Schaltelektronik wie die besagten Relais und den Sensoren bereitgestellt und miteinander verdrahtet werden müssen.

### Bezugszeichenliste

- 100: Palette
- 102: Rolle
- 104: Rolle
- 106: Rolle
- 108: Rolle
- 110: Steuermodul
- 112: Steuermodul
- 114: Steuermodul
- 116: Steuermodul
- 118: Palette
- 400: Entnahmemodul
- 402: Relais
- 404: Motor
- 406: Spannungsversorgung
- 408: Transportrichtung

## Patentansprüche

1. Rollenbahn mit parallel nebeneinander angeordneten ersten Rollen (102; 104; 106; 108), wobei jeweils zwei einander benachbarte ersten Rollen (102; 104; 106; 108) ein Rollenpaar mit einer in Transportrichtung der Rollenbahn gesehenen vorderen Rolle und einer entgegen der Transportrichtung der Rollenbahn gesehenen hinteren Rolle bilden, wobei jedem Rollenpaar zumindest ein Steuermodul (110; 112; 114; 116) zugeordnet ist, wobei der vorderen Rolle ein Sensor zur Abgabe eines ersten Signals in Abhängigkeit vom Vorhandensein oder Nicht-Vorhandensein eines Förderguts (100; 118) in einem vordefinierten Bereich relativ zu dieser vorderen Rolle zugeordnet ist und der hinteren Rolle ein Sensor zur Abgabe eines zweiten Signals in Abhängigkeit vom Vorhandensein oder Nicht-Vorhandensein eines Förderguts in einem vordefinierten Bereich relativ zu dieser hinteren Rolle zugeordnet ist, wobei das Steuermodul (110; 112; 114; 116) dazu ausgebildet ist, eine Veränderung eines Drehverhaltens der hinteren Rolle des ihr zugeordneten Rollenpaares zu steuern, wobei das Steuermodul (110; 112; 114; 116) dazu ausgebildet ist, die Veränderung des Drehverhaltens aufgrund zumindest des ersten oder zweiten Signals und einem zeitlich während Empfang dieses ersten oder zweiten Signals erfolgenden Flankenwechsels eines Zustands des zweiten oder ersten Signals zu steuern, wobei der Abstand zwischen der vorderen Rolle und der hinteren Rolle größer als eine in der Transportrichtung gesehenen Länge des Förderguts ist, wobei die Rollenbahn in der Transportrichtung gesehen abschüssig ausgebildet ist.

2. Rollenbahn nach Anspruch 1, wobei die ersten Rollen (102; 104; 106; 108) Antriebsrollen und/oder Bremsrollen sind.

3. Rollenbahn nach Anspruch 1, wobei die beiden Rollen des Rollenpaares durch mehrere zweite Rollen beabstandet sind, wobei die zweiten Rollen frei von einer eigenen Antriebsfunktion oder eigenen Bremsfunktion sind.

4. Rollenbahn nach einem der vorigen Ansprüche, wobei das erste Signal zwei verschiedene Zustände in Abhängigkeit vom Vorhandensein oder Nicht-Vorhandensein des Fördergutes (100; 118) in dem vordefinierten Bereich relativ zu der vorderen Rolle aufweisen kann und das zweite Signal zwei verschiedene Zustände in Abhängigkeit vom Vorhandensein oder Nicht-Vorhandensein des Fördergutes (100; 118) in dem vordefinierten Bereich relativ zu der hinteren Rolle aufweisen kann.

5. Rollenbahn nach einem der vorigen Ansprüche, wobei es sich bei dem ersten und zweiten Signal jeweils um ein wertediskretes Signal mit zwei möglichen Zuständen handelt.

6. Rollenbahn nach Anspruch 5, wobei
- im Falle des Vorhandeseins von Fördergut (100; 118) in dem vordefinierten Bereich relativ zu der vorderen Rolle der Zustand des ersten Signals durch die Abwesenheit dieses ersten Signals gegeben ist und
- im Falle des Vorhandeseins von Fördergut (100; 118) in dem vordefinierten Bereich relativ zu der hinteren Rolle der Zustand des zweiten Signals durch die Abwesenheit dieses zweiten Signals gegeben ist.

7. Rollenbahn nach einem der vorigen Ansprüche, wobei die Veränderung des Drehverhaltens eine Drehung der hinteren Rolle zum Transport des in dem vordefinierten Bereich relativ zu dieser hinteren Rolle befindlichen Förderguts (100; 118) um eine vordefinierte Strecke umfasst.

8. Rollenbahn nach Anspruch 7, wobei die vordefinierte Strecke unabhängig ist von dem ersten und zweiten Signal.

9. Rollenbahn nach Anspruch 7, wobei die vordefinierte Strecke in Abhängigkeit von dem ersten und zweiten Signal maximal zwei verschiedenen Werten größer Null entspricht.

10. Rollenbahn nach einem der vorigen Ansprüche 8 oder 9, wobei die vordefinierte Strecke der in Förderrichtung des Förderguts (100; 118) gemessenen Erstreckungslänge des Förderguts (100; 118) oder der Hälfte dieser Erstreckungslänge entspricht.

11. Rollenbahn nach einem der vorigen Ansprüche 7 bis 10, wobei die vordefinierte Strecke und die Veränderung des Drehverhaltens so gewählt sind, dass das Fördergut (100; 118) am Ende der Rollenbahn immer mittig zur am Ende der Rollenbahn befindlichen ersten Rolle zu Ruhen kommt.

12. Rollenbahn nach einem der vorigen Ansprüche, wobei einer in Förderrichtung des Förderguts (100; 118) am Ende der Rollenbahn befindlichen ersten Rolle eine in Transportrichtung der Rollenbahn gesehenen fiktive vorderen Rolle zur Bildung des Rollenpaares zugeordnet ist.

13. Rollenbahn nach Anspruch 12, wobei diese fiktive vordere Rolle immer ein erstes Signal bereitstellt, welches dem Vorhandensein von Fördergut (100; 118) in dem vordefinierten Bereich relativ zu dieser fiktiven vorderen Rolle entspricht.

14. Rollenbahn Anspruch 12, ferner mit einem am Ende der Rollenbahn in Transportrichtung der Rollenbahn gesehen angeordneten Entnahmesensor, wobei der Entnahmesensor der fiktiven vorderen Rolle zugeordnet ist, wobei dieser Entnahmesensor zur Abgabe des ersten Signals in Abhängigkeit vom Vorhandensein oder Nicht-Vorhandensein des Förderguts (100; 118) auf diesem Entnahmesensor ausgebildet ist.

15. Rollenbahn nach einem der vorigen Ansprüche 3 bis 14, wobei die Lauffläche der ersten Rollen (102; 104; 106; 108) gegenüber der Lauffläche der zweiten Rollen nach oben in Richtung des zu fördernden Förderguts (100; 118) abgehoben ist.

16. Rollenbahn nach einem der vorigen Ansprüche, wobei es sich bei Sensor um
einen Druckschalter handelt.

17. Rollenbahn nach einem der vorigen Ansprüche, wobei das Steuermodul (110; 112; 114; 116) dazu ausgebildet ist, die Veränderung des Drehverhaltens in Form eines Antriebs der hinteren Rolle zu steuern, wobei dadurch die hintere Rolle so lange angetrieben wird, bis das zweite Signal das Nicht-Vorhandensein des Förderguts (100; 118) in dem vordefinierten Bereich relativ zu dieser hinteren Rolle angibt.

18. Rollenbahn nach einem der vorigen Ansprüche, wobei der vordefinierte Bereich relativ zur hinteren und/oder vorderen Rolle ein Bereich auf dieser Rolle ist.

19. Rollenbahn nach einem der vorigen Ansprüche, wobei durch die Rollenbahn eine Lagerfläche eines Lagerregals für das Fördergut gebildet wird.

20. Rollenbahn nach einem der vorigen Ansprüche, wobei die ersten Rollen (102; 104; 106; 108) eine Antriebseinheit zur motorischen Drehung der ersten Rollen (102; 104; 106; 108) umfassen, wobei aufgrund der motorischen Drehung das Fördergut in der Transportrichtung bewegt werden kann.

21. Rollenbahn nach Anspruch 20, wobei die motorische Drehung der ersten Rollen (102; 104; 106; 108) so ausgebildet ist, dass das Fördergut unabhängig von seinem Gewicht mit einer vordefinierten Geschwindigkeit in der Transportrichtung bewegt werden kann.

22. Rollenbahn nach Anspruch 20 oder 21, wobei die motorische Drehung der
ersten Rollen (102; 104; 106; 108) so ausgebildet ist, dass die aufgrund der motorischen Drehung dem Fördergut bereitgestellte Translationsenergie des Förderguts zusammen mit der aufgrund der auf das Fördergut wirkenden Hangabtriebskraft und der daraus resultierenden kinetischen Energie gerade ausreicht, um das Fördergut in der Transportrichtung von der hinteren Rolle zu der vorderen Rolle zu bewegen.

23. Rollenbahn nach einem der vorigen Ansprüche 3-22, wobei unmittelbar zu einer ersten Rolle benachbarte zweite Rollen mechanisch mit der ersten Rolle gekoppelt sind, wobei aufgrund der mechanischen Kopplung das Rotationsverhalten der gekoppelten zweiten Rollen identisch ist mit dem Rotationsverhalten der ersten Rolle.

24. Lagerregal mit einer Lagerfläche für Fördergut, wobei die Lagerfläche eine
Rollenbahn gemäß einem der vorigen Ansprüche umfasst.

25. Verfahren zur Steuerung einer Rollenbahn mit parallel nebeneinander angeordneten ersten Rollen (102; 104; 106; 108), wobei jeweils zwei einander benachbarte ersten Rollen (102; 104; 106; 108) ein Rollenpaar mit einer in Transportrichtung der Rollenbahn gesehenen vorderen Rolle und einer entgegen der Transportrichtung der Rollenbahn gesehenen hinteren Rolle bilden, wobei jedem Rollenpaar zumindest ein Steuermodul (110; 112; 114; 116) zugeordnet ist, wobei der vorderen Rolle ein Sensor zur Abgabe eines ersten Signals in Abhängigkeit vom Vorhandensein oder Nicht-Vorhandensein eines Förderguts (100; 118) in einem vordefinierten Bereich relativ zu dieser vorderen Rolle zugeordnet ist und der hinteren Rolle ein Sensor zur Abgabe eines zweiten Signals in Abhängigkeit vom Vorhandensein oder Nicht-Vorhandensein eines Förderguts (100; 118) in einem vordefinierten Bereich relativ zu dieser hinteren Rolle zugeordnet ist, wobei das Verfahren durch das Steuermodul (110; 112; 114; 116) umfasst:
- Empfang des ersten oder zweiten Signals und zeitgleich während Empfang dieses ersten oder zweiten Signals Empfang eines Flankenwechsels eines Zustands des zweiten oder ersten Signals,
- daraufhin Veränderung eines Drehverhaltens der hinteren Rolle des ihr
zugeordneten Rollenpaares,
wobei der Abstand zwischen der vorderen Rolle und der hinteren Rolle größer als eine in der Transportrichtung gesehenen Länge des Förderguts ist, wobei die Rollenbahn in der Transportrichtung gesehen abschüssig ausgebildet ist.

26. Computerprogrammprodukt mit von einem Prozessor ausführbaren Instruktionen zur Durchführung der Schritte des Verfahrens nach Anspruch 26.
